# EUROPEAN PATENT APPLICATION

(11) **EP 4 245 144 A1**
(43) Date of publication of application: **20.09.2023**
(21) Application number: 22209023.5
(22) Date of filing: 23.11.2022
(51) Int. Cl.: A21C 9/06

(54) **FILLING REGULATING DEVICE FOR DUMPLING MACHINE**

(30) Priority: 15.03.2022 TW 111109503
(71) Applicant: Lin, Hung-Yu, Tainan City 701 (TW); Hung, Chih-Yi, Kaohsiung City 829 (TW); Lin, Chieh-Chi, Tainan City 700 (TW)
(72) Inventor: LIN, Hung-Yu, 701 Tainan City (TW)
(74) Representative: Viering, Jentschura & Partner mbB Patent- und Rechtsanwälte

(57) **Abstract**

A filling regulating device (3) for a dumpling machine comprises a base (32), having a circumferential wall (321) and an accommodating space (322), the circumferential wall (321) surrounding the accommodating space (322); a rotating member (34), rotatably disposed in the accommodating space (322) and abutting against the circumferential wall (321) tangentially, the rotating member (34) having at least one receiving groove (344) in a radial direction, the receiving groove (344) having a notch (3441) in an axial direction; and at least one regulating blade (35), movably disposed in the receiving groove. When the rotating member (34) drives the regulating blade (35) to rotate in the accommodating space (322) relative to the base (32), one end of the regulating blade (35) abuts against the circumferential wall (321) so that the regulating blade (35) is moved in the receiving groove (344), and the other end of the regulating blade (35) is located in a filling movement path (325). The filling regulating device can reduce the cost of frequent maintenance and repair of the dumpling machine effectively.

## Description

### FIELD OF THE INVENTION

The present invention relates to a filling regulating device for a dumpling machine, and more particularly to a filling regulating device provided with regulating blades in a filling movement path for moving a dumpling filling from a feed end to a discharge end.

### BACKGROUND OF THE INVENTION

Dumpling is a kind of food that consists of a filling and a dough sheet around the filling and has a shape similar to a Chinese gold ingot. Dumplings are traditionally served on important festivals, such as the Chinese New Year or the Winter Solstice. However, dumplings have become one of the staple foods eaten by people. Traditionally, dumplings are made manually. But, it takes a lot of time and manpower to make dumplings. Therefore, an automatic dumpling making machine is developed, thereby saving a lot of time and manpower.

In a fully automatic dumpling machine on the market, the drive device for filling is a gear pump. The gear pump includes two gears meshing with each other to rotate in a groove, so that the filling is pushed by the gears and moves from a feed end to a discharge end. In the process of producing food, it is necessary to regularly maintain and clean the production equipment. The gears in the gear pump are bulky and heavy, and are not easy to detach and install. The gears are consumables that need to be replaced and maintained regularly, so the cost is relatively high.

### SUMMARY OF THE INVENTION

The primary object of the present invention is to provide a filling regulating device for a dumpling machine, which can reduce the cost of frequent maintenance and repair of the dumpling machine.

The filling regulating device comprises a base, a rotating member, a rotating member, and at least one regulating blade. The base has a circumferential wall, an accommodating space, a feed end, and a discharge end. The circumferential wall surrounds the accommodating space. The feed end communicates with the accommodating space. The discharge end communicates with the accommodating space. The rotating member is rotatably disposed in the accommodating space and abuts against the circumferential wall tangentially. A filling movement path is defined between the feed end and the discharge end when the rotating member rotates. The rotating member has at least one receiving groove in a radial direction. An extending direction of the receiving groove passes through a rotation center of the rotating member. The receiving groove has a notch in an axial direction. The regulating blade has two ends. The regulating blade is inserted in the receiving groove from the notch along the axial direction and is movably disposed in the receiving groove in the radial direction. The two ends of the regulating blade are located at two opposite sides of the rotating member. When the rotating member drives the regulating blade to rotate in the accommodating space relative to the base, one end of the regulating blade abuts against the circumferential wall so that the regulating blade is moved in the receiving groove, and the other end of the regulating blade is located in the filling movement path.

Further, the at least one receiving groove of the rotating member includes a plurality of receiving grooves that are arranged at equal angles in a ring. The at least one regulating blade includes a plurality of regulating blades disposed in the respective receiving grooves. The regulating blades each have a recess. The recess of one of the regulating blades is movably opposite to the recess of the other regulating blade.

Further, the receiving grooves include a first receiving groove, a second receiving groove, and a third receiving groove. An acute angle is defined between the first receiving groove and the second receiving groove. The acute angle is sixty degrees. Another acute angle is defined between the second receiving groove and the third receiving groove. The another acute angle is sixty degrees. The regulating blades include two first regulating blades and a second regulating blade. The first regulating blades each have a first recess. The second regulating blade has a second recess and a third recess opposite to the second recess. One of the first regulating blades is movably disposed in the first receiving groove in the radial direction. The second regulating blade is movably disposed in the second receiving groove in the radial direction. The second recess of the second regulating blade is opposite to the first recess of the one of the first regulating blades. The other one of the first regulating blades is movably disposed in the third receiving groove in the radial direction. The first recess of the other one of the first regulating blades is opposite to the third recess of the second regulating blade.

Further, the feed end is disposed on the circumferential wall.

Further, the discharge end is disposed on the circumferential wall.

Further, a lid is disposed on the base.

Further, the accommodating space is a circular groove. The rotating member has a cylindrical shape. The rotating member is eccentrically disposed in the accommodating space.

Further, the accommodating space has a depth equal to a height of the rotating member as well as a height of the regulating blade in an axial direction of the rotating member.

According to the above technical features, the following effects can be achieved:
1. The rotating member drives the regulating blades to rotate relative to the base for moving the filling from the feed end to the discharge end.
2. The regulating blades are small in size and light in weight, which is more laborsaving and convenient for cleaning the dumpling machine.
3. When the regulating blades are rotated, through the corresponding arrangement of the recesses of the regulating blades, the regulating blades will not interfere with each other when they are moved in the receiving grooves, thereby improving the conveying efficiency of the filling.
4. The regulating blades, the rotating member and the base are all detachable and easy to be assembled, which can meet the needs for cleaning the food equipment frequently.
5. The regulating blades are consumables and need to be replaced frequently. The regulating blades of the present invention can be manufactured with ease, thereby saving the cost of replacing the regulating blades regularly.

### BRIEF DESCRIPTION OF THE DRAWINGS

FIG. 1 is a perspective view of the dumpling machine of the present invention;
FIG. 2 is a perspective view of the filling unit of the dumpling machine of the present invention;
FIG. 3 is a perspective view of the filling regulating unit of the dumpling machine of the present invention;
FIG. 4 is an exploded view of the filling regulating unit of the present invention;
FIG. 5 is a partial exploded view of the filling regulating unit of the present invention;
FIG. 6 is a partial perspective view of the filling regulating unit of the present invention;
FIG. 7 is a perspective view of the dough unit of the dumpling machine of the present invention;
FIG. 8 is an exploded view of the dough unit of the dumpling machine of the present invention;
FIG. 9 is a perspective view of the dumpling forming unit of the dumpling machine of the present invention;
FIG. 10 is a front view of the dumpling forming unit of the dumpling machine of the present invention;
FIG. 11 is a front partial view of the dumpling forming unit of the dumpling machine of the present invention;
FIG. 12 is a schematic view showing that the dumpling filling is stirred in the filling unit of the dumpling machine of the present invention;
FIG. 13 is a schematic view showing that the dumpling filling is moved in the filling regulating unit of the present invention;
FIG. 14 is a schematic view showing that dough is moved in the dough unit of the dumpling machine of the present invention;
FIG. 15 is a schematic view showing that dumplings are formed by the dumpling forming device of the dumpling machine of the present invention;
FIG. 16 is another schematic view showing that dumplings are formed by the dumpling forming device of the dumpling machine of the present invention;
FIG. 17 is a further schematic view showing that dumplings are formed by the dumpling forming device of the dumpling machine of the present invention; and
FIG. 18 is a yet further schematic view showing that dumplings are formed by the dumpling forming device of the dumpling machine of the present invention.

### DETAILED DESCRIPTION OF THE PREFERRED EMBODIMENTS

Embodiments of the present invention will now be described, by way of example only, with reference to the accompanying drawings.

The filling regulating device of the present invention is a device for feeding a filling when making dumplings. The filling regulating device cooperates with other parts, such as a module for stirring the filling, a module for feeding dough and a dumpling forming module for pressing and forming dumplings, to constitute a dumpling machine capable of semi-automatically making dumplings.

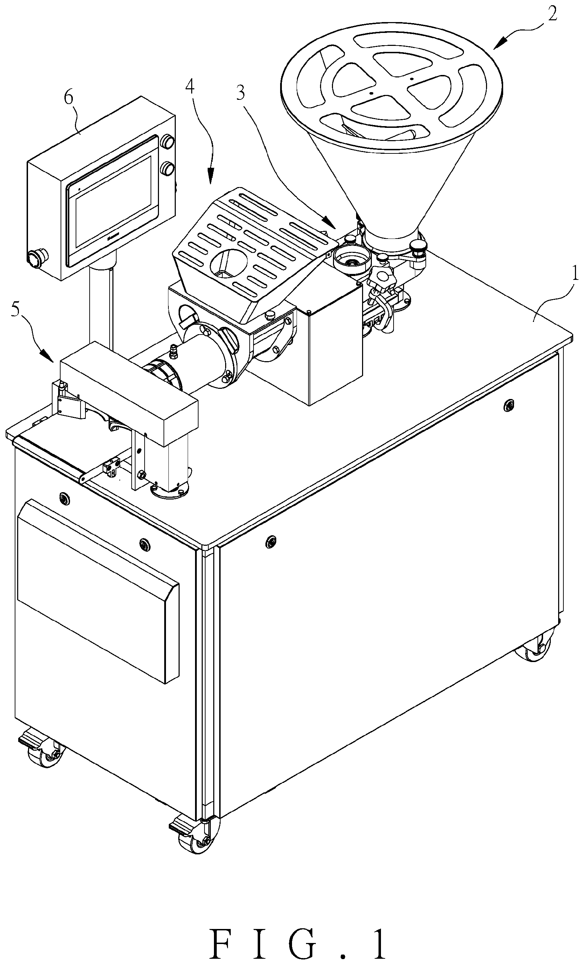

Referring to FIG. 1, the dumpling machine comprises a main body 1, a filling unit 2, a filling regulating device 3, a dough unit 4, a dumpling forming device 5, and a control unit 6. The filling unit 2 is connected to the filling regulating device 3. The filling regulating device 3 is fixed on the main body 1. The dough unit 4 is connected to the filling regulating device 3 and fixed on the main body 1. The dumpling forming device 5 is fixed on the main body 1 and is adjacent to the dough unit 4. The control unit 6 is electrically connected to the filling unit 2, the filling regulating device 3, the dough unit 4 and the dumpling forming device 5.

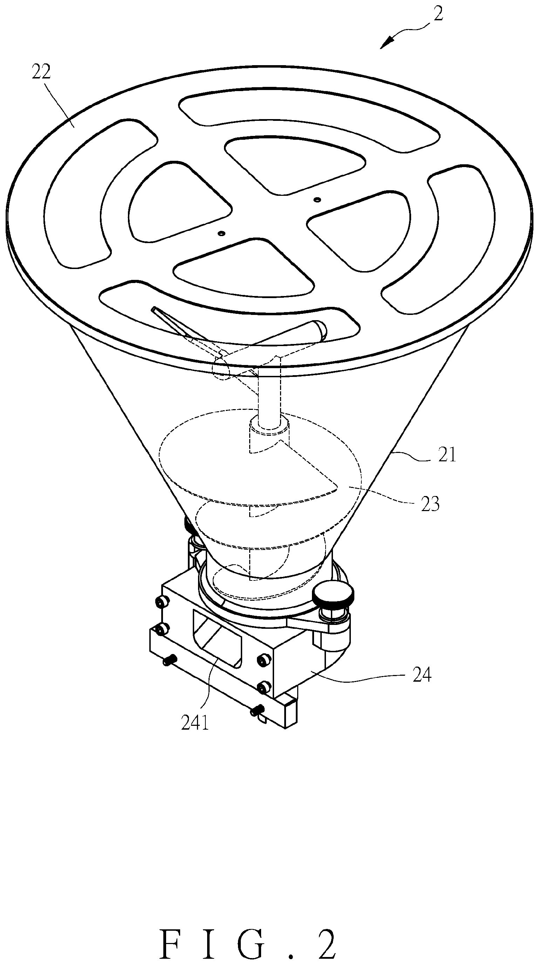

Referring to FIG. 2, the filling unit 2 includes a filling accommodating portion 21, a filling cover 22, a filling stirring member 23, and a manifold block 24. The filling accommodating portion 21 is fixed on the manifold block 24. The filling stirring member 23 is rotatably and detachably disposed in the filling accommodating portion 21. The filling cover 22 is configured to cover the filling accommodating portion 21. The manifold block 24 has a filling outlet 241. The filling outlet 241 communicates with the filling accommodating portion 21.

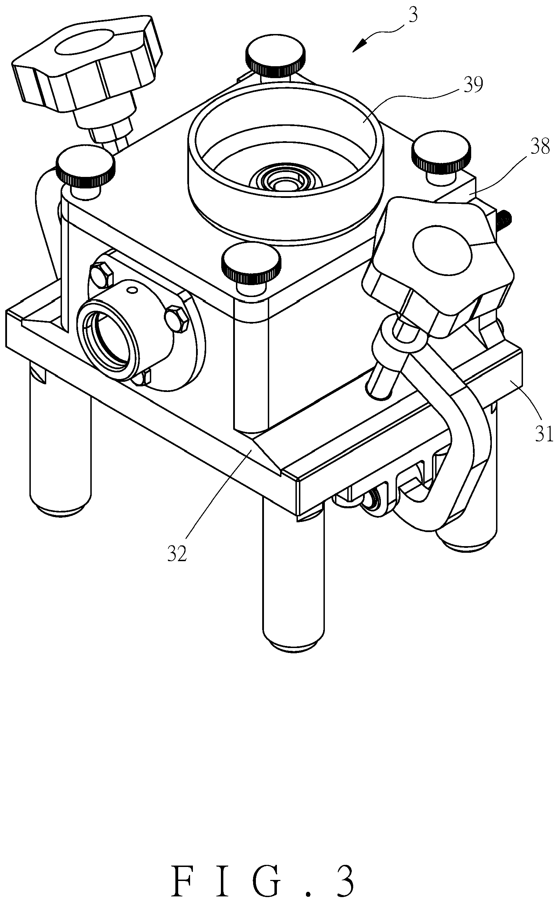

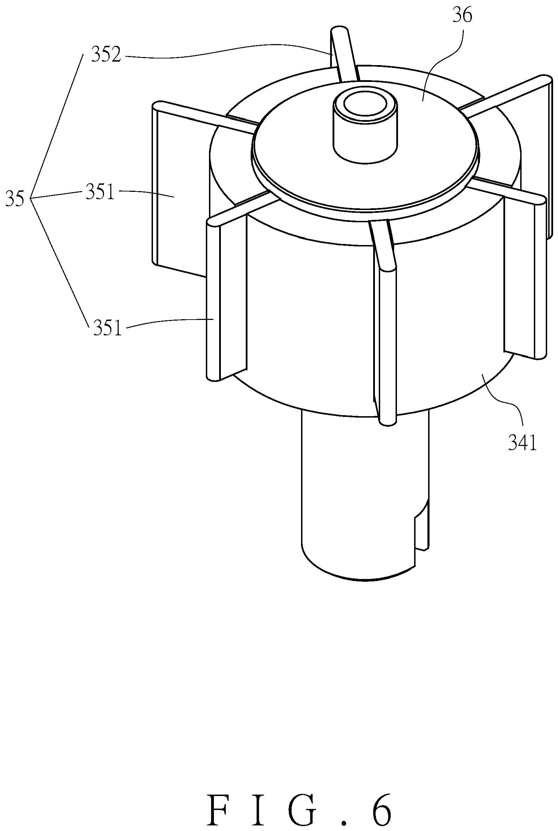

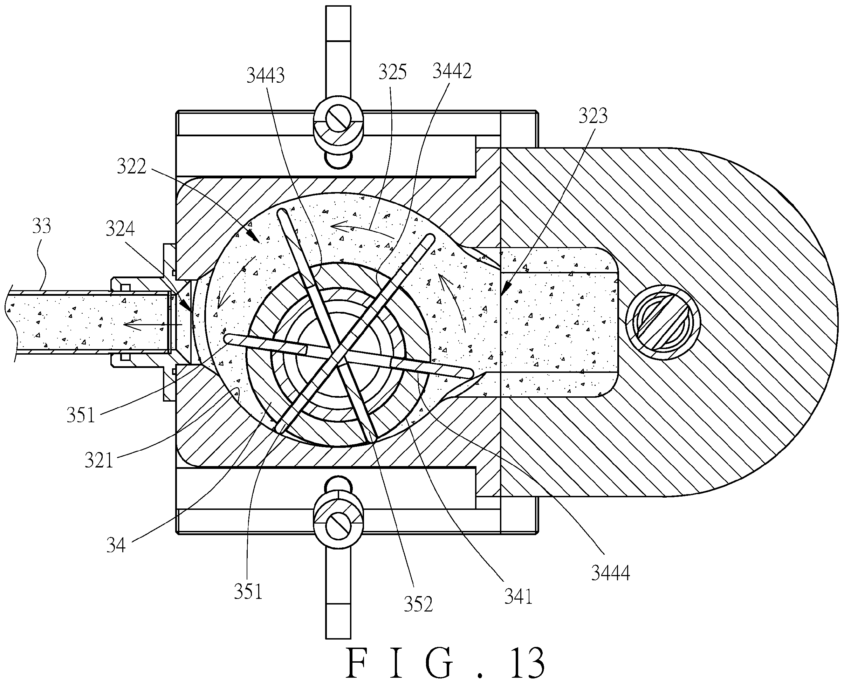

Please refer to FIG. 3, FIG. 4, FIG. 5, FIG. 6 and FIG. 13. The filling regulating device 3 includes a fixing seat 31, a base 32, a filling conveying tube 33, a rotating member 34, a plurality of regulating blades 35, an auxiliary member 36, an air hole seat 37, a lid 38, and an air hole cover 39. The fixing seat 31 is fixed on the main body 1. The base 32 is detachably disposed on the fixing seat 31. Specifically, the fixing seat 31 has two locking members 311. The two locking members 311 are disposed on two opposite sides of the fixing seat 31. When the base 32 is placed on the fixing seat 31, the base 32 is temporarily locked on the fixing base 31 by the two locking members 311. The base 32 has a circumferential wall 321, an accommodating space 322, a feed end 323, and a discharge end 324. The circumferential wall 321 surrounds the accommodating space 322. The feed end 323 is disposed on the circumferential wall 321 and communicates with the accommodating space 322. The discharge end 324 is disposed on the circumferential wall 321 and communicates with the accommodating space 322. The rotating member 34 is rotatably disposed in the accommodating space 322 and abuts against the circumferential wall 321 tangentially to form a filling movement path 325 between the feed end 323 and the discharge end 324 when the rotating member 34 rotates. The filling conveying tube 33 communicates with the discharge end 324. Specifically, the rotating member 34 has a cylindrical shape. The accommodating space 322 is a circular groove. The rotating member 34 is eccentrically disposed in the accommodating space 322 and is tangent to the circumferential wall 321 surrounding the accommodating space 322, so that the feed end 323 and the discharge end 324 are located on opposite sides of the contact point where the rotating member 34 contacts the circumferential wall 321, respectively. Thereby, the filling movement path 325 surrounded by the rotating member 34 and the circumferential wall 321 is formed in the accommodating space 322 for the filling to be moved from the feed end 323 to the discharge end 324.

The rotating member 34 has an outer annular surface 341, an inner annular surface 342, a coupling portion 343, and a plurality of receiving grooves 344 that are arranged at equal angles in a ring and pass through the outer annular surface 341 and the inner annular surface 342 in a first radial direction R1. The receiving grooves 344 each have a first notch 3441 in the first axial direction D1. The inner annular surface 342 surrounds the coupling portion 343. In this embodiment, the receiving grooves 344 include a first receiving groove 3442, a second receiving groove 3443, and a third receiving groove 3444. A first acute angle is defined between the first receiving groove 3442 and the second receiving groove 3443, and the first acute angle is sixty degrees. A second acute angle is defined between the second receiving groove 3443 and the third receiving groove 3444, and the second acute angle is sixty degrees. The regulating blades 35 each have two opposing ends. The regulating blades 35 include two first regulating blades 351 and a second regulating blade 352. The first regulating blade 351 has a first recess 3511. The second regulating blade 352 has a second recess 3521 and a third recess 3522 opposite to the second recess 3521. One of the first regulating blades 351 is movably disposed in the first receiving groove 3442 in the first radial direction R1. The second regulating blade 352 is movably disposed in the second receiving groove 3443 in the first radial direction R1, and the second recess 3521 of the second regulating blade 352 is opposite to the first recess 3511 of the one of the first regulating blades 351. The other one of the first regulating blades 351 is movably disposed in the third receiving groove 3444 in the first radial direction R1, and the first recess 3511 of the other one of the first regulating blades 351 is opposite to the third recess 3522 of the second regulating blade 352. Thereby, the one of the first regulating blades 351, the second regulating blade 352 and the other one of the first regulating blades 351 are respectively moved in the first receiving groove 3442, the second receiving groove 3443 and the third receiving groove 3444 and will not interfere with each other. When one end of each regulating blade 35 abuts against the circumferential wall 321, the other end of each regulating blade 35 is located in the filling movement path 325. The depth of the accommodating space 322 is equal to the height of the rotating member 34 in the first axial direction D1 as well as the height of the regulating blade 35 in the first axial direction D1 of the rotating member 34.

The auxiliary member 36 is disposed in the coupling portion 343. The auxiliary member 36 has a plurality of second notches 361 in the first axial direction D1. The second notches 361 correspond to the first receiving groove 3442, the second receiving groove 3443 and the third receiving groove 3444, respectively. The two first regulating blades 351 and the second regulating blade 352 will not be separated from the rotating member 34 when they are moved in the first receiving groove 3442, the second receiving groove 3443 and the third receiving groove 3444, respectively. The auxiliary member 36 has an opening 362. The opening 362 communicates with the accommodating space 322. The air hole seat 37 is fixed to the opening 362. The lid 38 has a hole 381. The lid 38 covers the base 32. The air hole seat 37 extends out of the hole 381. The air hole cover 39 is disposed on the air hole seat 37.

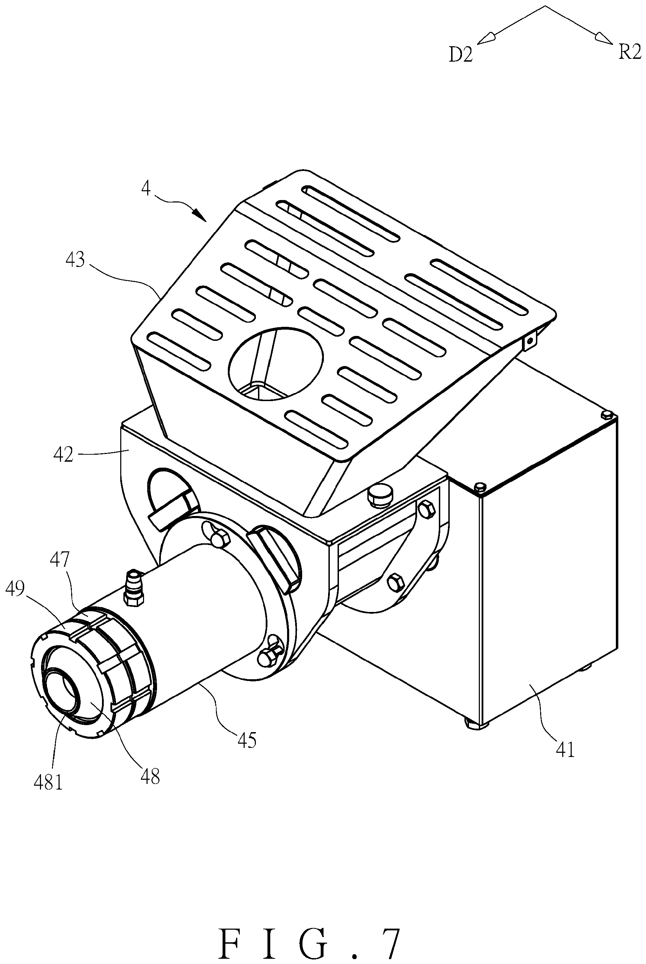

Please refer to FIG. 7, FIG. 8 and FIG. 14. The dough unit 4 includes a transmission gear seat 41, a dough accommodating portion 42, a dough cover 43, a plurality of dough pushing members 44, an extension member 45, a dough dividing member 46, a first fixing member 47, a dough forming member 48, and a second fixing member 49.

The transmission gear seat 41 is fixed on the main body 1. The dough accommodating portion 42 is disposed on the transmission gear base 41. The dough cover 43 covers the dough accommodating portion 42. A dough cover hole 431 is defined in the dough cover 43. The dough pushing member 44 is connected to the transmission gear base 41, so that the dough pushing member 44 is rotatably disposed in the dough accommodating portion 42 in a second axial direction D2. In this embodiment, the dough pushing member 44 includes a first dough pushing member 441, a second dough pushing member 442, and a third dough pushing member 443. The extension member 45 has an extension space 451 and an annular cooling groove 452. The annular cooling groove 452 surrounds the extension space 451. The extension member 45 is fixed on the dough accommodating portion 42. The extension space 451 communicates with the dough accommodating portion 42. The third dough pushing member 443 extends into the extension space 451. A heat exchanger is connected to the annular cooling groove 452. The dough dividing member 46 is fixed on the extension member 45 through the first fixing member 47 in the second axial direction D2 and abuts against the third dough pushing member 443. The dough forming member 48 is movably disposed on the first fixing member 47 through the second fixing member 49 in the second axial direction D2 and abuts against the dough dividing member 46. A dough outlet 481 is formed between the dough dividing member 46 and the dough forming member 48 in a second radial direction R2. The third dough pushing member 443 has a hollow tube portion 4431. The filling conveying tube 33 has a filling outlet end 331. The filling conveying tube 33 extends into the hollow tube portion 4431 and passes through the dough dividing member 46, the first fixing member 47, the dough forming member 48 and the second fixing member 49 for a dough outlet end 481 to communicate with and surround a filling outlet end 331. Specifically, the first fixing member 47 is screwedly connected to the extension member 45, and the dough dividing member 46 is sandwiched between the first fixing member 47 and the extension member 45. The second fixing member 49 is screwedly connected to the first fixing member 47, and the dough forming member 48 is sandwiched between the second fixing member 49 and the first fixing member 47. The dough forming member 48 and the dough dividing member 46 form the dough outlet end 481 in the second radial direction R2. The dough outlet end 481 is in the form of a ring so that the filling outlet end 331 is enclosed within the dough outlet end 481.

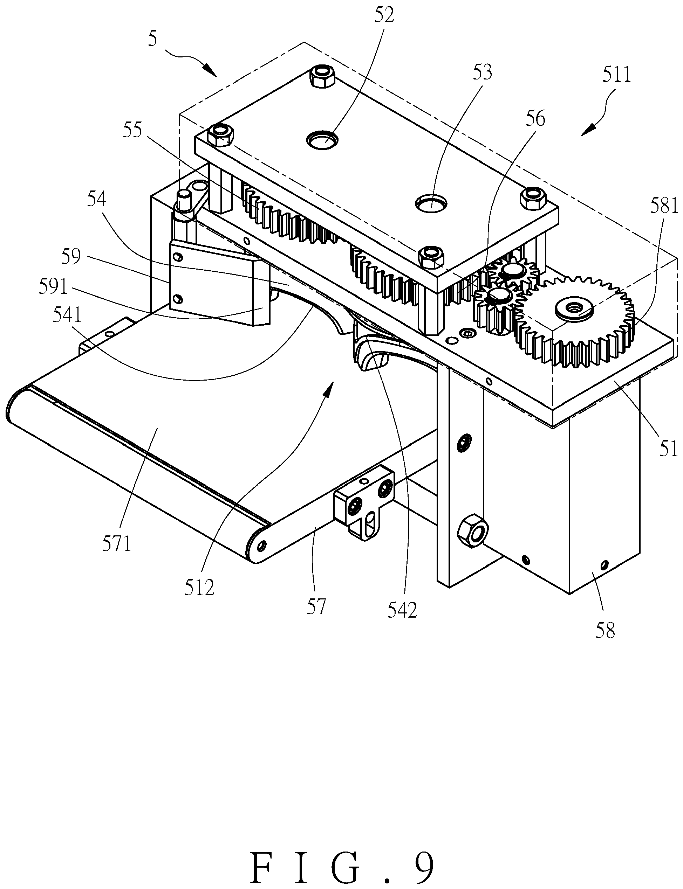

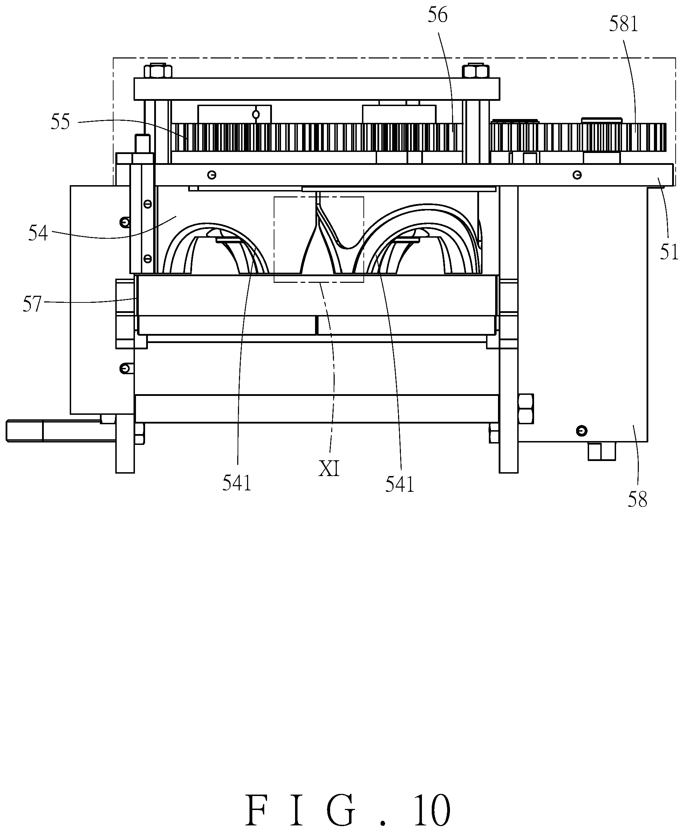

Please refer to FIG. 9, FIG. 10 and FIG. 11. The dumpling forming device 5 includes a support base 51, a first rotating shaft 52, a second rotating shaft 53, two mold wheels 54, a first gear 55, a second gear 56, a conveying member 57, a driving member 58, and a scraper 59.

The first rotating shaft 52 and the second rotating shaft 53 are rotatably disposed on the support base 51 in a height direction. One of the mold wheels 54 and the first gear 55 are secured on the first rotating shaft 52. The other mold wheel 54 and the second gear 56 are secured on the second rotating shaft 53. Both the first gear 55 and the second gear 56 are located above the support base 51 and mesh with each other. The two mold wheels 54 are rotatably disposed below the support base 51 in different directions and are arranged at a distance P. The two mold wheels 54 each have a plurality of mold cavities 541 concave from the lateral. The mold cavities 541 are arranged at equal angles in a ring. Each mold cavity 541 is in the shape of a concave arc. The mold cavities 541 of the two mold wheels 54 face each other. Specifically, when the two mold wheels 54 are rotated in different directions, the mold cavities 541 of the two mold wheels 54 face each other for folding up the dough sheets after the filling has been fed in to form dumplings. In this embodiment, each mold wheel 54 has three mold cavities 541 with an included angle of 120 degrees between every adjacent two of the three mold cavities 541. A curved cutter 542 is provided. The cutter 542 is spaced a distance above the mold cavities 541 of one of the mold wheels 54 and is disposed adjacent to the mold cavities 541. The cutter 542 is against the other mold wheel 54.

The conveying member 57 has a conveying plane 571 along a horizontal direction. The conveying member 57 is disposed on the support base 51. The conveying plane 571 is located below the two mold wheels 54 and adjacent to the two mold wheels 54. The driving member 58 is disposed on the support base 51. The driving member 58 includes a driving gear 581. The driving gear 581 is meshed with the second gear 56. Thereby, the driving member 58 drives the second gear 56 and the first gear 55. The two mold wheels 54 are rotated in different directions for the mold cavities 541 of the two mold wheels 54 to face each other. The driving member 58 is connected to the conveying member 57 and drives the conveying member 57, so that the moving direction of the conveying plane 571 is the same as the tangential direction of rotation of the two mold wheels 54. Specifically, the support base 51 has an entry end 511 and exit end 512. The two mold wheels 54 are disposed between the entry end 511 and the exit end 512. The tangential direction of rotation of the two mold wheels 54 is the same as the direction from the entry end 511 to the exit end 512, and is also the same as the moving direction of the conveying plane 571. The scraper 59 is fixed on the support base 51, is adjacent to the exit end 512, and is located above the conveying plane 571. The scraper 59 has a tip 591. The tip 591 abuts against the other mold wheel 54.

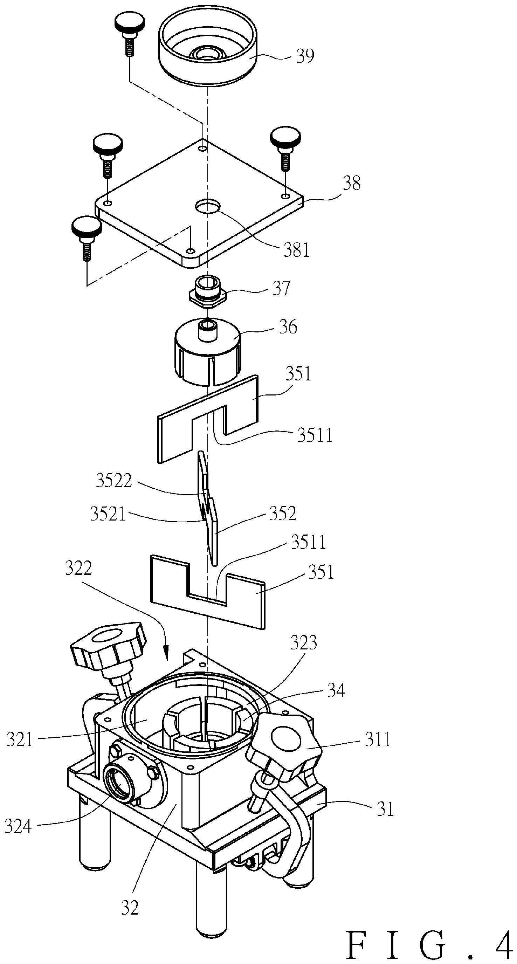

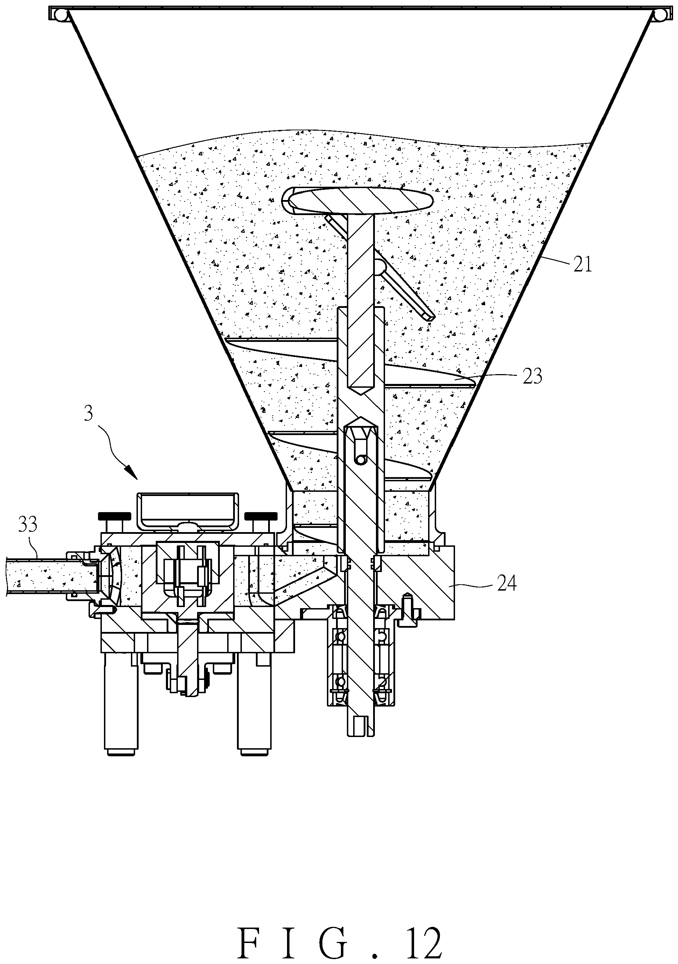

Please refer to FIG. 4, FIG. 12 and FIG. 13. When the dumpling machine is used for making dumplings, the filling prepared in advance need to be put into the filling accommodating portion 21. Through rotation of the filling stirring member 23, the filling placed in the filling accommodating portion 21 is moved to the manifold block 24 and then moved from the filling outlet 241 to the accommodating space 322 of the filling regulating device 3.

When the rotating member 34 is rotating, one of the first regulating blades 351, in the first receiving groove 3442, will be driven by the rotating member 34 to rotate in the accommodating space 322. When one end of the one of the first regulating blades 351 contacts the circumferential wall 321, the one end will abut against the circumferential wall 321 and rotate with the rotating member 34 so that the one of the first regulating blades 351 is moved in the radial direction of the first receiving groove 3442. The other end of the one of the regulating blades 351 extends out of the outer annular surface 341 of the rotating member 34 and extends into the filling movement path 325. In this way, the filling moved in the accommodating space 322 and in the filling movement path 325 will be pushed by the other end of the one of the first regulating blades 351 extending into the filling movement path 325 and moved from the feed end 323 to the discharge end 324. Similarly, the second regulating blade 352 and the other first regulating blade 351 in the second receiving groove 3443 and the third receiving groove 3444 also push the filling in the filling movement path 325 in the same way, so that the filling is continuously moved into the filling conveying tube 33 from the discharge end 324. The one of the first regulating blades 351, the second regulating blade 352 and the other one of the first regulating blades 351 respectively disposed in the first receiving groove 3442, the second receiving groove 3443 and the engaging inserting groove 3444 are driven by the rotating member 34 to rotate in the accommodating space 322 and moved in the radial direction of the first receiving groove 3442, the second receiving groove 3443 and the third receiving groove 3444. Through the corresponding arrangement of the first recess 3511 and the second recess 3521, when the one of the first regulating blades 351 and the second regulating blade 352 are moved in the first receiving groove 3442 and the second receiving groove 3443 respectively, they will not interfere with each other. Similarly, through the corresponding arrangement of the first recess 3511 and the third recess 3522, when the second regulating blade 352 and the other one of the first regulating blades 351 are moved in the second receiving groove 3443 and the third receiving groove 3444 respectively, they will not interfere with each other.

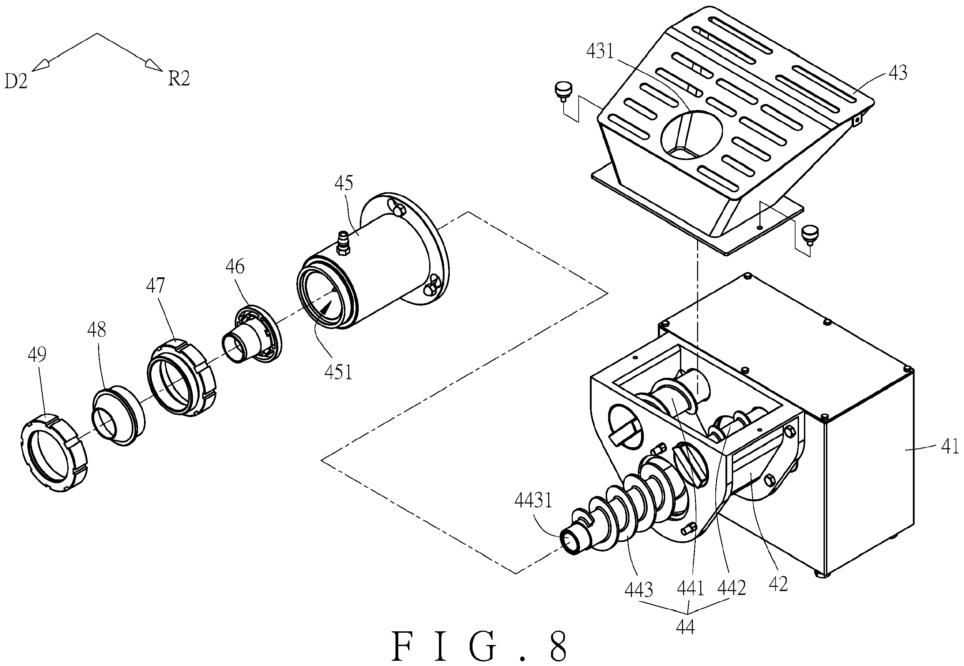

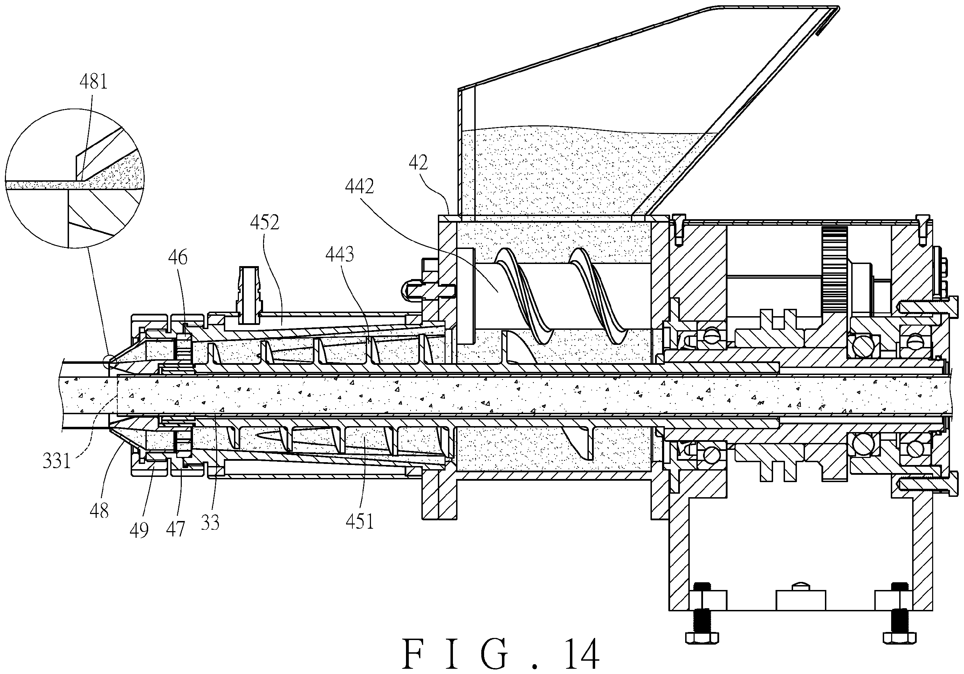

Please refer to FIG. 8 and FIG. 14. When the dumpling machine is used for making dumplings, the dough prepared in advance need to be put into the dough accommodating portion 42. Through the pushing of the first dough pushing member 441, the second dough pushing member 442 and the third dough pushing member 443, the dough is pushed from the dough accommodating portion 42 into the extension space 451. The dough is continuously pushed by the third dough pushing member 443, so that the dough in the extension space 451 is moved to the dough outlet end 481 through the dough dividing member 46. Because the dough is continuously pressed and pushed by the third dough pushing member 443 in the extension space 451, the temperature of the dough will increase to affect the taste of the dumplings when the dumplings are cooked and eaten after being formed. Thus, cooling water with lower temperature is continuously introduced into the annular cooling groove 452 through the heat exchanger, thereby reducing the temperature of the dough in the extension space 451.

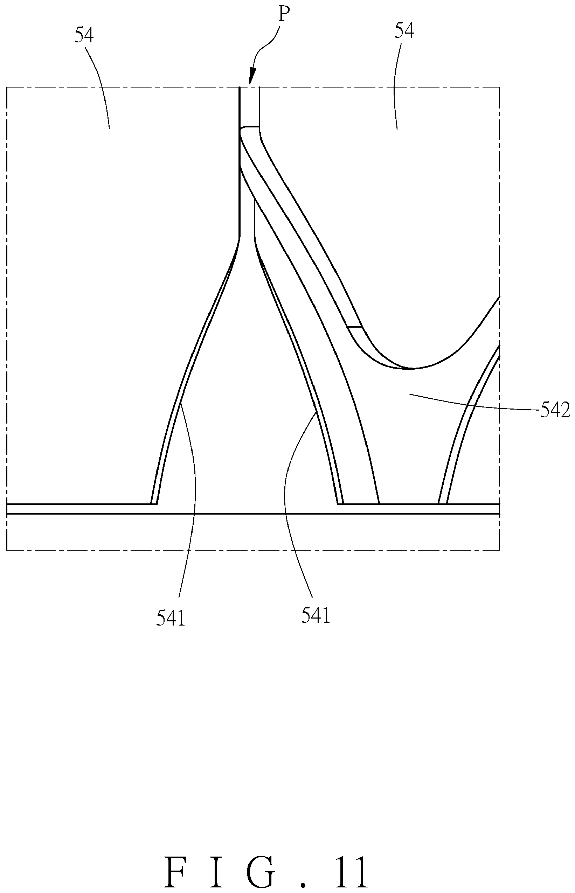

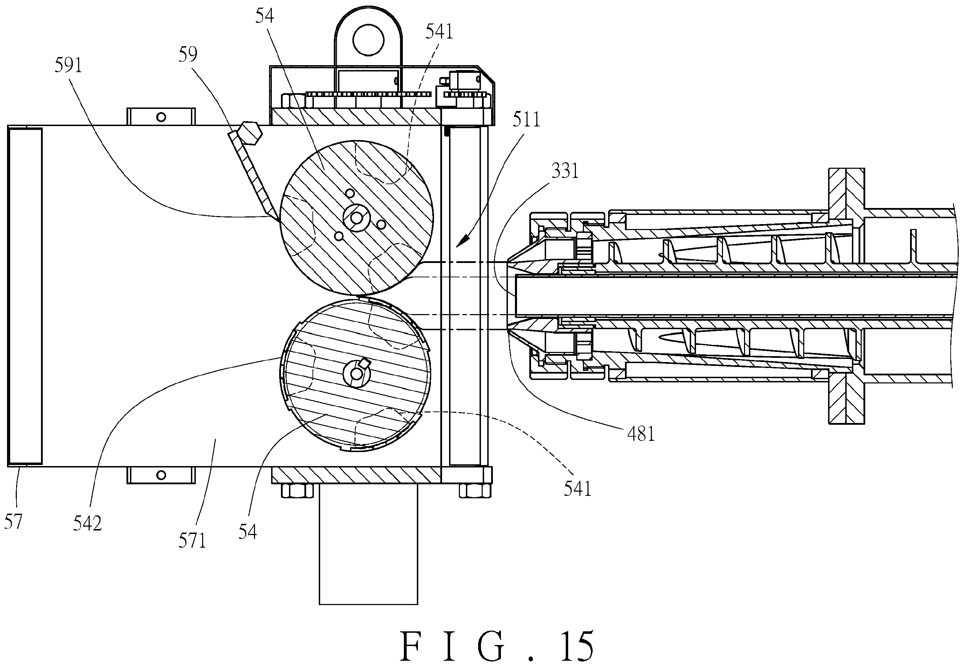

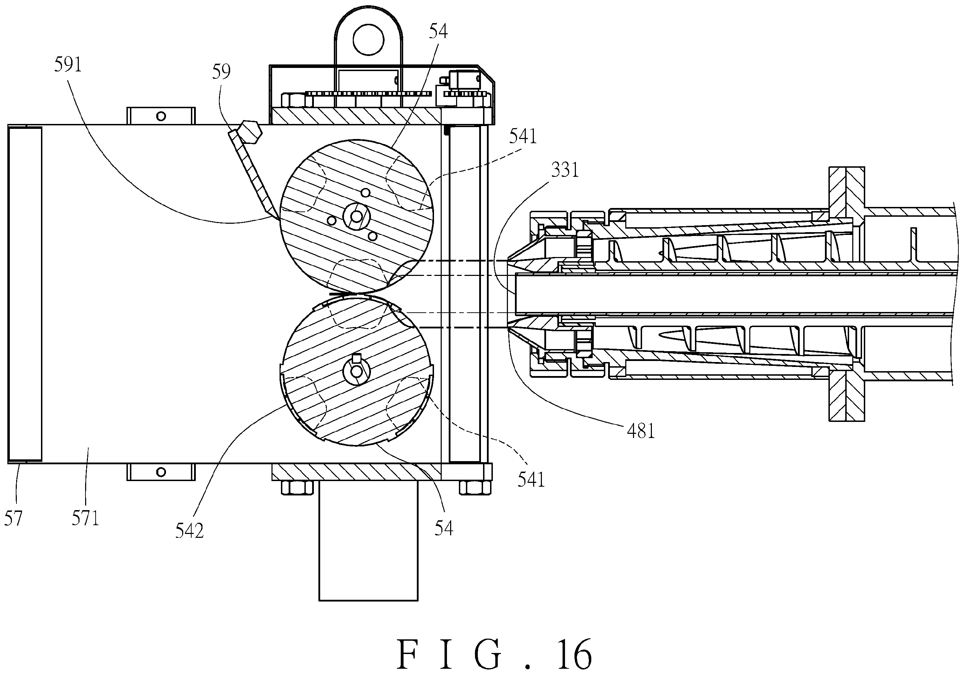

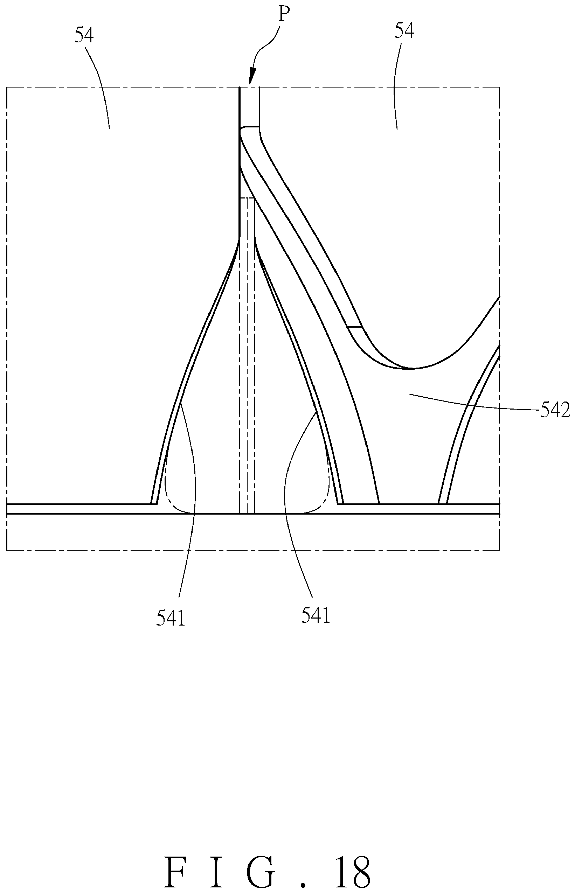

Please refer to FIG. 11, FIG. 15, FIG. 16, FIG. 17 and FIG. 18. The dough and the filling are extruded from the dough outlet end 481 and the filling outlet end 331 respectively, so that the dough sheet is in a tubular shape and the filling is in the dough sheet. When the dough sheet and the filling are extruded, they are placed on the conveying plane 571 to pass between the two mold wheels 54 from the entry end 511. When the two mold wheels 54 are rotated in different directions, the mold cavities 541 of the two mold wheels 54 will face each other for folding up the dough sheets after the filling has been fed in to form dumplings. The conveying plane 571 under and adjacent to the two mold wheels 54 will abut against the bottom of the finished dumpling, so that the finished dumpling has a flat bottom to stand on the conveying plane 571. The distance P between the two mold wheels 54 and the distance along which the cutter 542 is spaced from the mold cavity 541 of the one of the mold wheels 54 will determine the thickness and width of the curved edge of the dumpling. The dough sheet remaining on the cutter 542 will be removed by the cutter 542. The finished dumplings standing on the conveying plane 571 will be transported to the next production process by the conveying member 57. When the dumpling is formed, the scraper 59 having the tip 591 against the other one of the mold wheels 54 will scrape off the dough sheet remaining on the other one of the mold wheels 54, to avoid affecting the forming process of the next dumpling.

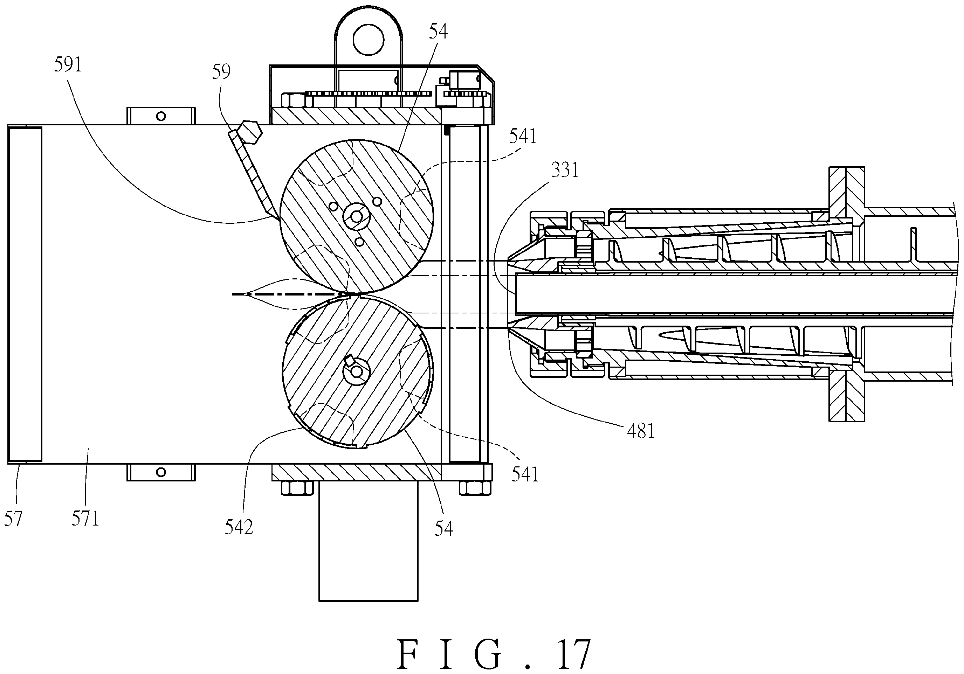

Please refer to FIG. 8 and FIG. 17. After the dough sheet and the filling are formed into dumplings, the dough sheet remaining on the cutter 542 will be removed by the cutter 542. The removed dough sheet can be put into the dough accommodating portion 42 via the dough cover hole 431 of the dough cover 43 after being visually inspected to be free of contamination. There is no need to open the dough cover 43 for putting the dough sheet into the dough accommodating portion 42.

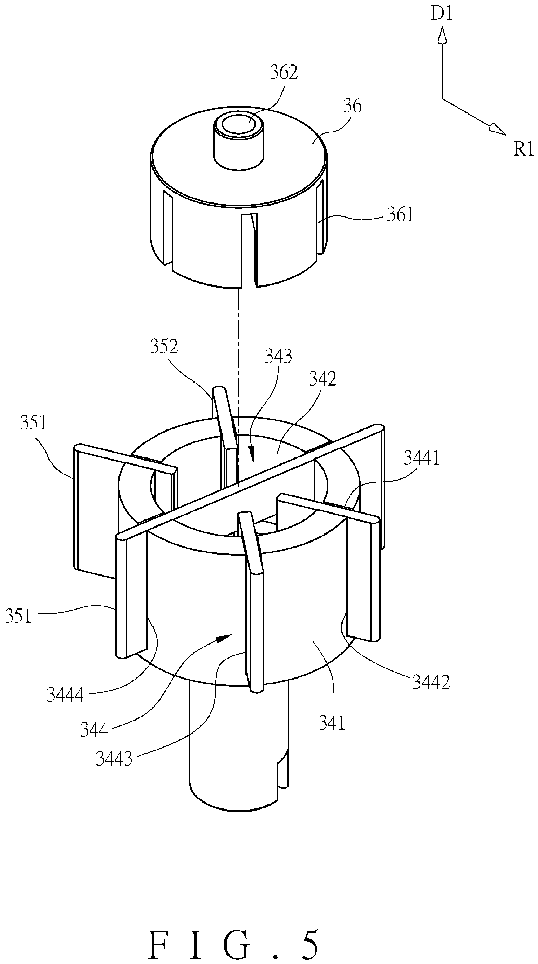

Please refer to FIG. 4 and FIG. 5. After use, when the filling regulating device 3 of the dumpling machine is to be cleaned, the lid cover 38 and the air hole cover 39 are removed, and then the auxiliary member 36 is taken out in the first axial direction D1. After that, the regulating blades 35 are taken out from the rotating member 34 in the first axial direction D1 for cleaning. The regulating blades 35 are small in size and light in weight. It is very convenient to detach or clean the regulating blades 35. Because of the relative relationship between the recesses of the regulating blades 35, damage to the filling regulating device 3, caused by errors in assembly, can be avoided.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A filling regulating device (3) for a dumpling machine, comprising:
a base (32), having a circumferential wall (321), an accommodating space (322), a feed end (323) and a discharge end (324), the circumferential wall (321) surrounding the accommodating space (322), the feed end (323) communicating with the accommodating space (322), the discharge end (324) communicating with the accommodating space (322);
a rotating member (34), rotatably disposed in the accommodating space (322) and abutting against the circumferential wall (321) tangentially, a filling movement path (325) being defined between the feed end (323) and the discharge end (324) when the rotating member (34) rotates, the rotating member (34) having at least one receiving groove (344) in a radial direction, an extending direction of the receiving groove (344) passing through a rotation center of the rotating member (34), the receiving groove (344) having a notch (3441) in an axial direction;
at least one regulating blade (35), having two ends, the regulating blade (35) being inserted in the receiving groove (344) from the notch (3441) along the axial direction and being movably disposed in the receiving groove (344) in the radial direction, the two ends of the regulating blade (35) being located at two opposite sides of the rotating member (34);
wherein when the rotating member (34) drives the regulating blade (35) to rotate in the accommodating space (322) relative to the base (32), one end of the regulating blade (35) abuts against the circumferential wall (321) so that the regulating blade (35) is moved in the receiving groove (344), and the other end of the regulating blade (35) is located in the filling movement path (325).

2. The filling regulating device (3) as claimed in claim 1, wherein the at least one receiving groove (344) of the rotating member (34) includes a plurality of receiving grooves (344) that are arranged at equal angles in a ring, the at least one regulating blade (35) includes a plurality of regulating blades (35) disposed in the respective receiving grooves (344), the regulating blades (35) each having a recess, the recess of one of the regulating blades (35) is movably opposite to the recess of the other regulating blade (35).

3. The filling regulating device (3) as claimed in claim 2, wherein the receiving grooves (344) include a first receiving groove (3442), a second receiving groove (3443) and a third receiving groove (3444), an acute angle is defined between the first receiving groove (3442) and the second receiving groove (3443), the acute angle is sixty degrees, another acute angle is defined between the second receiving groove (3443) and the third receiving groove (3444), the another acute angle is sixty degrees; the regulating blades (35) include two first regulating blades (351) and a second regulating blade (352), the first regulating blades (351) each have a first recess (3511), the second regulating blade (352) has a second recess (3521) and a third recess (3522) opposite to the second recess (3521), one of the first regulating blades (351) is movably disposed in the first receiving groove (3442) in the radial direction, the second regulating blade (352) is movably disposed in the second receiving groove (3443) in the radial direction, the second recess (3521) of the second regulating blade (352) is opposite to the first recess (3511) of the one of the first regulating blades (351), the other one of the first regulating blades (351) is movably disposed in the third receiving groove (3444) in the radial direction, and the first recess (3511) of the other one of the first regulating blades (351) is opposite to the third recess (3522) of the second regulating blade (352).

4. The filling regulating device (3) as claimed in claim 1, wherein the feed end (323) is disposed on the circumferential wall (321).

5. The filling regulating device (3) as claimed in claim 1, wherein the discharge end (324) is disposed on the circumferential wall (321).

6. The filling regulating device (3) as claimed in claim 1, wherein a lid (38) is disposed on the base (32).

7. The filling regulating device (3) as claimed in claim 1, wherein the accommodating space (322) is a circular groove, the rotating member (34) has a cylindrical shape, and the rotating member (34) is eccentrically disposed in the accommodating space (322).

8. The filling regulating device (3) as claimed in claim 1, wherein the accommodating space (322) has a depth equal to a height of the rotating member (34) as well as a height of the regulating blade (35) in an axial direction of the rotating member (34).
